# EUROPÄISCHE PATENTANMELDUNG

(11) **EP 1 515 128 A1**
(43) Veröffentlichungstag der Anmeldung: **16.03.2005**
(21) Anmeldenummer: 03020775.7
(22) Anmeldetag: 12.09.2003
(51) Int. Cl.: G01K 11/32

(54) **Verfahren und Anordnung zur Prüfung der Dichtheit von Kavernenbohrungen**

(71) Anmelder: GESO Gesellschaft für Sensorik, Geotechnischen Umweltschutz und Mathematische Modellierung mbH, Jena, 07749 Jena (DE); Kavernen Bau- und Betriebs GmbH, 30625 Hannover (DE)
(72) Erfinder: Hurtig, Eckart, Prof. Dr., 14480 Potsdam (DE); Vogel, Bernhard, Dipl.-Phys., 07747 Jena (DE); Grosswig, Stephan, Dr., 07749 Jena (DE); Crotogino, Fritz, Dipl.-Ing., 30659 Hannover (DE); Schönebeck, Jörg, Dipl.-Ing., 31157 Sarstedt (DE)
(74) Vertreter: Kruspig, Volkmar, Dipl.-Ing.

(57) **Zusammenfassung**

Die Erfindung betrifft ein Verfahren und eine Anordnung zur Prüfung der Dichtheit von Kavernenbohrungen mit Rohrtour, wobei die Kaverne mit einer Flüssigkeit, insbesondere Sole gefüllt ist und ein Testgas in den Ringraum bis unter den Rohrschuh der letzten zementierten Rohrtour eingepresst wird, um unterhalb des Rohrschuhs im obersten Teil des Kavernenhalses eine Grenzfläche zwischen Flüssigkeit und Testgas auszubilden, wobei weiterhin als Maß für die Dichtheit das Volumen des eingeschlossenen Gases zu verschiedenen Zeitpunkten betrachtet und die Lage des Flüssigkeitsspiegels festgestellt wird. Erfindungsgemäß wird bevorzugt in den Flüssigkeits- oder Solestrang ein oder mehrere faseroptische Temperatursensorkabel bis unterhalb des nachzuweisenden Flüssigkeitsspiegels eingebracht, um den Temperaturverlauf entlang der Bohrung vom Kavernenkopf an sowie den Temperatursprung an der Grenzfläche zwischen Flüssigkeit und Testgas zu ermitteln, wobei durch die quasi-kontinuierliche Bestimmung des Temperaturverlaufs sowohl eintretende Gleichgewichtszustände erkannt werden als auch nur temperaturbedingte Änderungen des Gasvolumens kompensierbar sind.

## Beschreibung

Die Erfindung betrifft ein Verfahren sowie eine Anordnung zur Prüfung der Dichtheit von Kavernenbohrungen mit Rohrtour, wobei die Kaverne mit einer Flüssigkeit, insbesondere Sole gefüllt ist und ein Testgas in den Ringraum bis unter den Rohrschuh der letzten zementierten Rohrtour eingepresst wird, um unterhalb des Rohrschuhs im obersten Teil des Kavernenhalses eine Grenzfläche zwischen Flüssigkeit und Testgas auszubilden, wobei weiterhin ein Maß für die Dichtheit das Volumen des eingeschlossenen Gases zu verschiedenen Zeitpunkten betrachtet und die Lage oder Teufe des Flüssigkeitsspiegels festgestellt wird, gemäß Oberbegriff des Patentanspruchs 1.

Speicher- und Solegewinnungskavernen sind große untertätige Hohlräume, die in geeigneten Salzformationen mit darüber befindlichem Gebirge angelegt werden. In Abhängigkeit von der konkreten geologischen Situation lassen sich geometrische Volumina bis zu 800.000 m³ in Teufen bis zu 3000 m realisieren.

Kavernen dienen z.B. der Untertagespeicherung von flüssigen und gasförmigen Kohlenwasserstoffen. Die Untertagespeicherung von derartigen Kohlenwasserstoffen ist im Vergleich zur obertägigen Speicherung kostengünstiger, sicherer und umweltfreundlicher. Mit Hilfe der Untertagespeicherung von Erdgas ist es z.B. möglich, eine Bevorratung für den saisonalen Spitzenbedarf als auch die Schaffung strategischer Reserven zu realisieren.

Zum Nachweis der Dichtheit von Kavernenbohrungen werden sogenannte Mechanical Integrity Test durchgeführt, welche im wesentlichen auf der Bestimmung der Gas-Flüssigkeit-Spiegelteufe unterhalb des Rohrschuhs der letzten zementierten Rohrtour beruhen. Dies bedeutet, dass sich die Dichtheitsprüfung von Kavernen im Normalfall auf die Überprüfung der Dichtheit des Rohrschuhs der letzten, kritischen zementierten Rohrtour gegenüber dem Gebirge bezieht. Hierbei wird davon ausgegangen, dass das Salzgebirge, in das die Kaverne gesolt wurde, an sich dicht ist.

Das generelle Prinzip der Dichtheitsprüfung besteht darin, ein Testgas in den Ringraum einer mit Sole oder einem flüssigen Produkt gefüllten Kaverne bis unter den Rohrschuh der letzten zementierten Rohrtour einzupressen. Hierfür ist üblicherweise bereits der spätere Soleauslagerungsstrang oder ein entsprechender Teststrang eingebaut. Das Restgas selbst ist leichter als die Sole oder das gespeicherte Medium und nicht mit diesem mischbar, so dass sich in dem offenen Bohrloch unterhalb des Rohrschuhs, d.h. dem obersten Teil des Kavernenhalses eine stabile Grenzfläche zwischen der Flüssigkeit und dem Testgas ausbildet. Auf diese Weise wird ein definiertes mit Testgas gefülltes Volumen erzeugt, das sich vom Übergangsbereich Kavernenhals / letzter zementierter Rohrschuh über den Ringraum zum Kavernenkopf erstreckt. Als Maß für die Dichtheit im Übergangsbereich Kavernenhals / letzter zementierter Rohrschuh dient die innerhalb des Volumens eingeschlossene Gasmasse. Durch Temperatur- oder Kaverneneinflüsse kann sich allerdings das Gasvolumen auch bei dichter Bohrung ändern. Die Bilanz der eingeschlossenen Gasmassen für zwei Zeitpunkte ist im Dichtheitsfall konstant.

Für die Bestimmung der Dichtheit bzw. der Massebilanzen ist es also notwendig, die exakte Bohrlochgeometrie unterhalb des Rohrschuhs bis zum Flüssigkeitsspiegel zu kennen, den Kopfdruck des Testgases zu ermitteln, die Teufe des Flüssigkeitsspiegels zu bestimmen und den Temperaturverlauf vom Bohrlochkopf bis zum Flüssigkeitsspiegel festzustellen.

Bei der bekannten sogenannten In-Situ-Bilanz- Methode wird die Lage des Flüssigkeitsspiegels durch sogenannte Gamma-Gamma-Messungen aus dem Teststrang heraus bestimmt, wobei die Genauigkeit hier im Bereich von ± 0,1 m liegt.

Das Problem der bekannten Messtechnologie liegt in den vorerwähnten unerwünschten Temperatureinflüssen auf die eingeschlossene Gasmasse, so dass eine Verfälschung der Messergebnisse resultiert. Außerdem ist eine kontinuierliche bzw. quasi-kontinuierliche Messung nach dem Stand der Technik bisher nicht möglich. Problematisch ist weiterhin die Störung des Temperaturregimes bzw. der eingeschlossenen Gasmasse durch das Ein- und Ausfahren von Messvorrichtungen mit der Folge eines unerwünschten Einflusses auf ein womöglich sich bereits einstellendes Temperaturgleichgewichts.

Aus der DE 101 49 092 A1 ist ein Verfahren und eine Anordnung zur Blanketspiegel-Überwachung von Speicher- und Solegewinnungskavernen vorbekannt. Gemäß der dortigen Lösung wird in den Ringraum zwischen dem äußeren Solestrang und der letzten Rohrtour mindestens ein beheizbares, faseroptisches Sensorkabel in Form einer Kabelschleife eingebracht. Das oder die oberen Enden des oder der Sensorkabel sind an ein faseroptisches Temperaturmesssystem, beruhend auf Raman-Rückstreueffekten und die bevorzugt als elektrische Leiter ausgebildeten Heizleiter an eine Stromversorgung angeschlossen. Auswerteseitig wird zunächst die Temperatur-Teufen-Verteilung im Ringraum bestimmt und anschließend erfolgt ein Aktivieren der elektrischen Heizer. Während des Heizens werden gemäß dem vorbekannten Stand der Technik weitere Temperatur-Teufen-Verteilungsmessungen durchgeführt, um nach Feststellen eines thermischen Gleichgewichtszustands die Heiz-Stromversorgung abzuschalten. Während der Abkühlphase erfolgt ebenfalls eine Temperatur-Teufen-Verteilungs-Messung in vorgegebenen Schritten. Die erhaltenen Temperatur-Teufen-Verteilungs-Messwerte werden einem Auswerterechner zugeführt und abgespeichert. Ermittelte unterschiedliche Temperaturniveaus nach Erreichen des thermischen Gleichgewichts oder unterschiedliche Werte des aus den Messdaten berechneten integralen Wärmeübergangs-Widerstands von Sensorkabel zur Sole bzw. Blanket dienen dann der Blanket-Spiegelbestimmung.

Dieses Verfahren ist zwar zur In-Situ-Überwachung von Solegewinnungskavernen, welche einen äußeren Solestrang und verfestigte, zementierte Rohrtouren besitzen, vorteilhaft, kann jedoch zur Dichtheitsprüfung von Kavernen, die auf der Beurteilung des Volumenverhaltens einer eingeschlossen Gasmasse beruht, nicht angewendet werden, da durch die vom Heizleiter freigesetzte Energie eine unerwünschte Veränderung des Gasvolumens die Folge wäre.

Aus dem Vorgenannten ist es daher Aufgabe der Erfindung, ein Verfahren und eine Anordnung zur Prüfung der Dichtheit von Kavernenbohrungen mit Rohrtour anzugeben, wobei die Kaverne mit einer Flüssigkeit gefüllt ist und ein Testgas in den Ringraum bis unter den Rohrschuh der letzten zementierten Rohrtour eingepresst wird, um über die Beobachtung des Volumens des eingeschlossenen Gases auf die Dichtheit des Systems zu schlussfolgern, wobei die Dichtheitsprüfung mit geringem Aufwand, hoher Reproduzierbarkeit und über einen längeren Zeitraum möglich sein soll.

Die Lösung der Aufgabe der Erfindung erfolgt verfahrensseitig mit einer Lehre gemäß Definition nach Patentanspruch 1 sowie mit einer Anordnung zur Durchführung des Verfahrens gemäß den Merkmalen nach Patentanspruch 7, wobei die Unteransprüche mindestens zweckmäßige Ausgestaltungen und Weiterbildungen darstellen.

Demnach wird erfindungsgemäß, bevorzugt in den in die Bohrung eingehängten Flüssigkeits- oder Solestrang, ein faseroptisches Temperatursensorkabel bis unterhalb des nachzuweisenden Flüssigkeitsspiegels eingebracht. Dieses faseroptische Sensorkabel dient der Ermittlung des Temperaturverlaufs entlang der Bohrung vom Kopf an sowie der Ermittlung des Temperatursprungs an der Grenzfläche zwischen Flüssigkeit und Testgas.

Durch die quasi-kontinuierliche Bestimmung des Temperaturverlaufs können sowohl eingetretene Gleichgewichtszustände erkannt als auch temperaturbedingte Änderungen des Gasvolumens festgestellt und kompensiert werden.

Erfindungsgemäß ist zur Verbesserung der Ortsauflösung vorgeschlagen, bei der Bestimmung des Flüssigkeitsspiegels das Sensorkabel in Schritten vorgegebener Schrittweite zu bewegen, vorzugsweise anzuheben.

Eine weitere Möglichkeit zur Verbesserung der Messgenauigkeit auf der Basis der Erhöhung des Temperaturkontrasts zwischen dem gasgefüllten Ringraum und der Flüssigkeit im Solestrang besteht darin, eine definierte Menge Flüssigkeit oder Sole aus dem Strang zu entnehmen, so dass Flüssigkeit oder Sole aus dem Kavernenbereich, die eine andere Temperatur aufweist, nachströmen kann.

Verfahrensgemäß kann die gesamte Temperatur-Teufen-Verteilung entlang des Verlaufs des Sensorkabels innerhalb der Kavernenbohrung ermittelt und aufgezeichnet werden, so dass hieraus der Gleichgewichtszustand nach Aufgeben des Testgases bestimmbar ist.

Um aus den ermittelten unterschiedlichen Verläufen der Temperaturkurvenabschnitte oberhalb und unterhalb des Flüssigkeitsspiegels die exakte Lage der Teufe der Flüssigkeit ermitteln zu können, wird eine approximierte Kurvenanpassung berechnet, wobei aus dem Schnittpunkt dieser, z.B. linearisierten Kurvenanpassungen die gewünschte Lage ermittelbar ist. Für die Kurvenanpassung des Temperaturverlaufs oberhalb des Flüssigkeitsspiegels wird insbesondere der Bereich bis zum Rohrschuh berücksichtigt.

Mit der faseroptischen Temperaturmesstechnik ist es erfindungsgemäß möglich, über die vorgenommenen Temperaturmessungen die Lage des Flüssigkeitsspiegels mit der erforderlichen Genauigkeit zu erfassen.

Bei einer Ausführung wurde das faseroptische Temperatursensorkabel in den Rohrstrang für die spätere Soleauslagerung bis ca. 30 m unter den vermuteten Flüssigkeitsspiegels eingebaut. Dabei wurde die Lage des Flüssigkeitsspiegels im offenen Bohrloch unterhalb der letzten zementierten Rohrtour durch Messungen aus dem Rohrstrang heraus bestimmt, und zwar ohne dass die Temperatursensorik unmittelbaren Kontakt mit dem Flüssigkeitsspiegel hatte.

Bei dem erfindungsgemäß genutzten Verfahren der verteilten faseroptischen Temperaturmessung wird auf die Temperaturabhängigkeit bestimmter optischer Eigenschaften von Lichtwellenleitern zur Messung der Temperatur entlang dieses Lichtwellenleiters abgestellt. Das Verfahren selbst basiert auf der OTDR-Methode (Optical Time Domain Reflectometry). Hierfür werden Laserlichtimpulse in den Lichtwellenleiter des Sensorkabels eingekoppelt. Bei der Ausbreitung des Laserlichtimpulses wird das Licht an den Molekülen des Lichtwellenleiters gestreut. Ein geringer Teil des Laserlichts wird zurückgestreut. Die Intensität und die spektrale Zusammensetzung des Streulichts werden durch die Moleküle im Lichtwellenleiter und deren Verhalten bestimmt. Das rückgestreute Licht setzt sich aus verschiedenen spektralen Anteilen zusammen, die durch unterschiedliche Mechanismen der Wechselwirkung zwischen Laserlicht und den Lichtwellenleiter-Bausteinen hervorgerufen werden. Neben der eingestrahlten Wellenlänge (Rayleigh-Rücksteuerung) treten in dem Rückstreuspektrum weitere Spektrallinien auf.

Für die Temperaturmessung ist das durch Streuung an Photonen erzeugte Raman-Rückstreulicht wichtig, das aus dem Stokes- und dem Anti-Stokes-Band besteht. Diese beiden Bänder sind in ihrer Wellenlänge jeweils zu geringeren bzw. größeren Wellenlängen hin verschoben. Während die Intensität des Stokes-Bandes annähernd temperaturunabhängig ist, zeigt das Anti-Stokes-Band eine deutliche Temperaturabhängigkeit. Der Lichtwellenleiter wird dadurch selbst zum sensitiven Element. Durch Bildung der Quotienten der jeweiligen Intensitäten der Bänder können in eindeutiger Weise die Temperatur des Lichtwellenleiterabschnitts, in dem das Licht zurückgestreut wurde, berechnet und alle Einflüsse, die auf Veränderungen der Lichtquelle oder anderer äußerer Einwirkungen auf den Lichtwellenleiter zurückzuführen sind, mit Ausnahme der Temperatur eliminiert werden. Ein Auswertegerät verknüpft die Intensitätsmessung mit einer Laufzeitmessung des Lichtes im Lichtwellenleiter und liefert auf diese Weise die Temperaturwerte sämtlicher Längenabschnitte, wodurch man eine eindeutige Ortszuordnung aller Temperaturwerte erhält.

Beim Einsatz faseroptischer Temperaturmesstechnik gemäß der Erfindung ist von Vorteil, dass die Installation des Messkabels in der Bohrung sehr einfach vorgenommen werden kann, wobei das Kabel in der Bohrung während des gesamten Testzeitraums verbleibt. Das vorhandene Temperaturfeld wird durch wiederholte Messvorgänge nicht beeinflusst, so dass die Messungen mit einem wählbaren Zeitraster kontinuierlich erfolgen können. Auch ist eine zeitgleiche Messung der Temperatur über die gesamte Messstrecke des Kabels möglich und es wird allen Sicherheitsanforderungen Genüge getan, da keine elektrischen Bauteile oder Baugruppen sich entlang des Temperatursensorkabels befinden.

Anordnungsseitig befindet sich demnach in der im wesentlichen vertikal verlaufenden oder abgelenkten Rohrtour mindestens ein faseroptisches Temperatursensorkabel oder eine Gruppe aus derartigen Sensorkabeln, welches bzw. welche bis in den Kavernenbereich hinein reichen und wobei eine Winde bzw. Wickel- oder Aufrollvorrichtung vorgesehen ist, um das Sensorkabel in seiner vertikalen Position zu verändern.

Am unteren Sensorkabelende kann eine Sonde zur exakten Teufenmessung befindlich sein.

Bei einer bevorzugten Ausführungsform ist das Sensorkabel in dem vorhandenen oder eingebrachten Solestrang eingehängt. Das Sensorkabel ist, wie aus der vorstehenden Schilderung ersichtlich, Bestandteil eines faseroptischen Temperaturmesssystems, beruhend auf der Erfassung von Raman-Rückstreueffekten.

Das untere Ende des Sensorkabels kann als Kabelschleife ausgebildet und/oder in einer Kabelabschlussdose untergebracht sein.

Bezüglich der Ausführungsform einer Kabelabschlussdose für faseroptische Temperatursensorkabel sei auf die Lehre nach DE 43 04 546 C2 verwiesen. Die dort offenbarten Merkmale gelten ausdrücklich als vorstehender Erfindung zugehörig.

Die Erfindung soll nachstehend anhand eines Ausführungsbeispiels sowie unter Zuhilfenahme von mehreren Figuren näher erläutert werden.

Hierbei zeigen:
- Fig. 1: eine prinzipielle Anordnung des Sensorkabels zur Bestimmung des Flüssigkeitsspiegels, wobei das Messkabel in einer Rohrtour ohne direkten Kontakt zum Flüssigkeitsspiegel eingehängt ist;
- Fig. 2: eine ermittelte Temperatur-Teufen-Verteilung im Ausgangszustand als Mittelwert aus 21 Einzelmessungen;
- Fig. 3: eine weitere Darstellung mit Temperatur-Teufen-Verteilung im Teufenbereich 900 bis 1070 m;
- Fig. 4: die Temperatur-Teufen-Verteilung mit optimierter Angleichung der Messwerte zur exakten Bestimmung des Flüssigkeitsspiegels;
- Fig. 5: das Temperatur-Teufen-Profil für die gesamte Bohrung nach Ablassen einer definierten Solemenge;
- Fig. 6: das Temperatur-Teufen-Profil nach Ablassen der Solemenge im Teufenbereich 1000 bis 1070 m und
- Fig. 7: eine Darstellung der Differenz zwischen Referenzkurve und Messkurven mit erkennbarem Temperatursprung im Bereich des Flüssigkeitsspiegels.

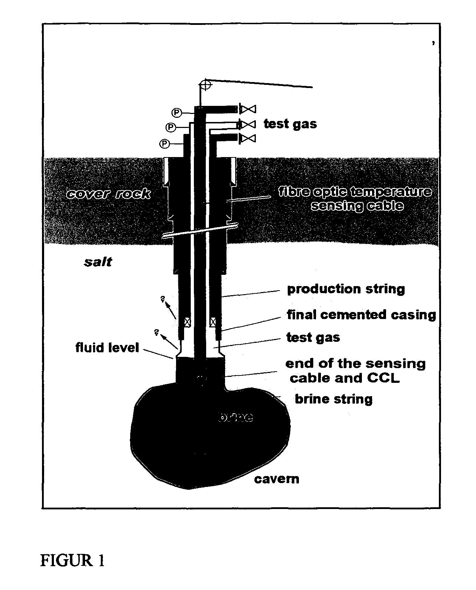

Gemäß der Darstellung nach Fig. 1 wurde bei einer Versuchsbohrung ein faseroptisches Temperatursensorkabel in den vorhandenen 4½" Soleaustragsstrang eingehängt. Das Kabelende befand sich in einer Teufe von etwa 1071 m, wobei die Teufe über einen CCL-Magnetsensor bestimmt wurde, welcher sich unterhalb des Kabelendes befand.

Der nachzuweisende Flüssigkeitsspiegel befand sich gemäß Ausführungsbeispiel außerhalb der Rohrtour im oberen Kavernenhalsbereich.

Die Lage des Flüssigkeitsspiegels musste also durch Messungen innerhalb des Strangs bestimmt werden, ohne dass das Messkabel einen direkten Zugang oder Kontakt zum Flüssigkeitsspiegel hatte.

Zur Dichtheitsprüfung wurde Testgas, z.B. Stickstoff, über die in Fig. 1 erkennbare Testgaszuführung eingebracht, wobei hier dann Druckverhältnisse etwa im Bereich von ungefähr 200 bar herrschen.

Das Deckgebirge dichtet die im Salz befindliche Kaverne ausreichend ab, wobei sich als kritische Stelle die letzte untere zementierte Rohrtour, hier insbesondere der Bereich des Rohrschuhs, darstellt.

Das eingepresste Testgas drückt die in der Kaverne befindliche Flüssigkeit bis unterhalb dieses Rohrschuhbereichs.

Die beispielsweise ausgeführten Messungen verliefen in drei Phasen. Zunächst erfolge eine Einstellung des Gleichgewichtszustands nach Einbau des Temperatursensor- bzw. Messkabels und eine Bestimmung des Ausgangszustands. Die Messzeit betrug hier etwa 12,5 Stunden.

In der nächstfolgenden Phase wurden Messungen zur Bestimmung des Flüssigkeitsspiegels vorgenommen, wobei hier das Messkabel in fünf Schritten (Messungen K6 bis K11) um jeweils 0,1 m angehoben wurde. Auf diese Weise gelang es, die Ortsauflösung zu verbessern. Bei jedem Schritt wurden etwa 15 bis 16 Einzellogs über die gesamte Teufe gemessen.

In der dritten Phase wurde zur Erhöhung des Temperaturkontrasts zwischen dem stickstoffgefüllten Bereich des Ringraums und der Sole im Strang etwa 400 I Sole entnommen, so dass kältere Sole aus dem Kavernenbereich im Strang aufstieg. Wie auch bei der zweiten Phase wurde hier das Messkabel in z.B. fünf Schritten um jeweils 0,1 m (Messungen K13 bis K18) angehoben.

Aufgrund der parallel durchgeführten Tiefenmessungen befand sich das Kabelende am Beginn der ersten und zweiten Phase in einer Teufe von 1071,39 m und am Beginn der dritten Phase in einer Teufe von 1070,89 m.

Für die Bestimmung des Flüssigkeitsspiegels standen daher Messdaten des Ausgangszustands, Messungen während der ersten Phase und Messungen während der dritten Phase zur Verfügung. Die spätere weitere Auswertung erfolgte auf der Grundlage der voneinander unabhängigen Datensätze der Messungen während der ersten und dritten Phase.

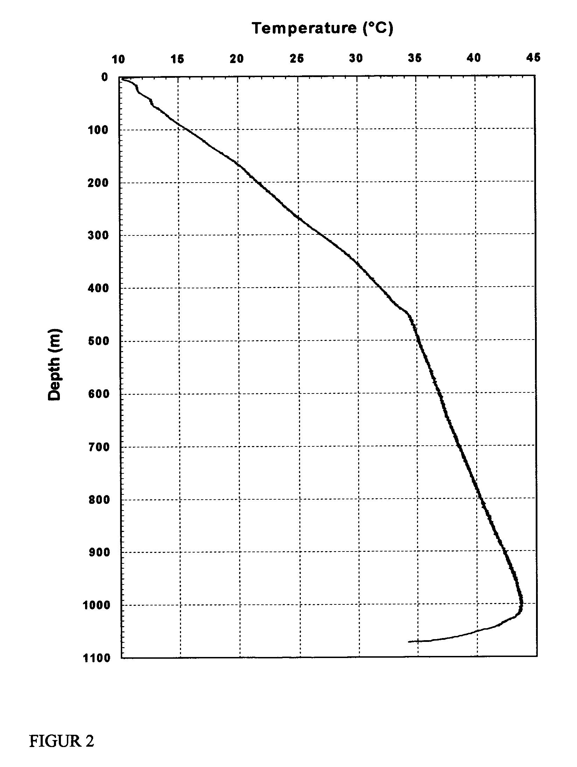

Fig. 2 zeigt die Temperatur-Teufen-Verteilung im Ausgangszustand Deutlich ist hier die Grenze zwischen dem Deckgebirge und dem Salz bei ca. 450 m zu erkennen. Ab ca. 1000 m erfolgte ein steiler Abfall der Temperatur.

Der Einsatz der faseroptischen Temperaturmesstechnik gemäß Ausführungsbeispiel gestattet es, die komplette Temperatur-Teufen-Verteilung kontinuierlich zeitgleich zu bestimmen. Damit ist es möglich, unmittelbar den Zeitpunkt zu bestimmen, an dem sich der Gleichgewichtszustand in der Bohrung nach Aufgeben des Testgases eingestellt hat. Weiterhin können während der Dichtheitsprüfung mögliche Temperaturschwankungen mit einer Temperaturauflösung von mindestens 0,1 K erfasst werden, so dass der Einfluss der Temperatur auf das Gasvolumen in dem Ringraum ständig kontrollier-, aber auch kompensierbar ist. Hierdurch kann die Genauigkeit der Dichtheitsprüfung deutlich verbessert werden.

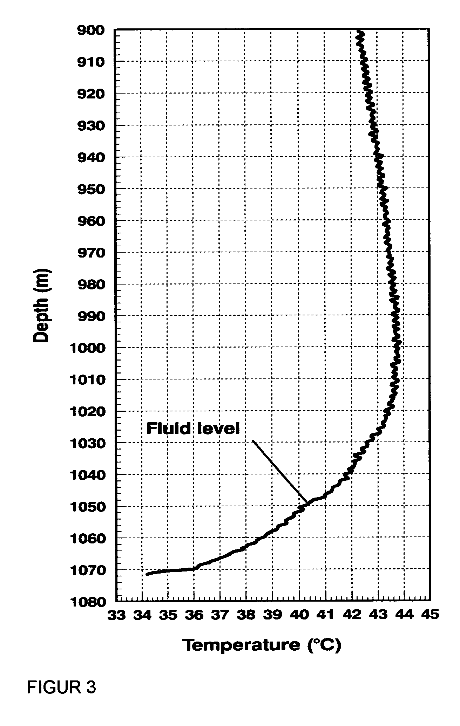

Fig. 3 stellt die Temperatur-Teufen-Verteilung im Ausgangszustand für den Teufenabschnitt 900 bis 1070 m dar. In einer Teufe von ca. 1049 deutet sich bereits die Lage des Flüssigkeitsspiegels an. Hier tritt ein Temperatursprung von etwa 0,5 K auf.

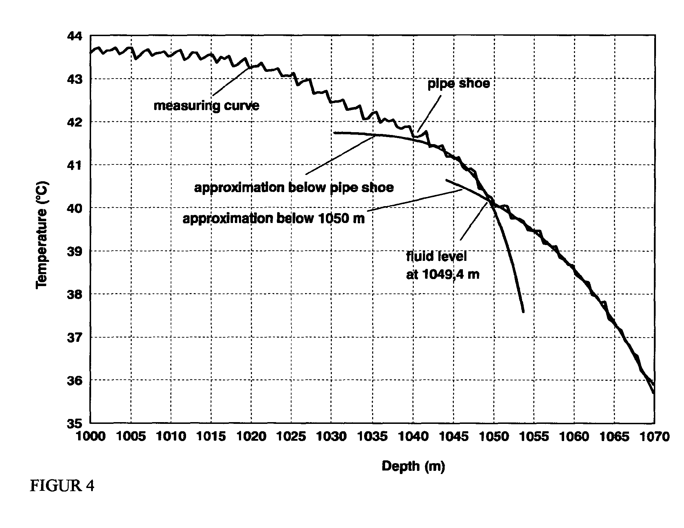

Der Verlauf der Temperaturkurve oberhalb und unterhalb des Flüssigkeitsspiegels unterscheidet sich wie anhand der Fig. 4 nachvollziehbar.

Für die Kurvenabschnitte unterhalb des Flüssigkeitsspiegels und oberhalb des Flüssigkeitsspiegels bis zum Rohrschuh wurden getrennt optimierte Kurvenanpassungen berechnet. Die untere Kurve zeigt die Kurvenanpassung an den Teufenbereich unterhalb des Flüssigkeitsspiegels 1050 m. Da sich der Kurvenverlauf am Rohrschuh bei 1040 m verändert, steht für die Anpassung der Messwerte oberhalb des Flüssigkeitsspiegels nur der kleine Teufenbereich bis zum Rohrschuh zur Verfügung. Aus dem Schnittpunkt der beiden optimierten Kurven ergibt sich dann die exakte Lage des Flüssigkeitsspiegels bei 1049,4 m.

Zur Verbesserung des Temperatureffekts wurden in der dritten Messphase Solemengen aus der Rohrtour abgelassen. Dadurch steigt die Sole in der Rohrtour um etwa 40 m auf. Durch den Aufstieg der kälteren Sole wird eine gewünschte zusätzliche Temperaturdifferenz zwischen der solegefüllten Rohrtour und dem Ringraum geschaffen. Diese Temperaturdifferenz baut sich allerdings infolge der guten Wärmeleitfähigkeit der Sole im Ringraum unterhalb des Flüssigkeitsspiegels schneller ab als im Bereich des mit Stickstoff beaufschlagten Ringraums oberhalb des Flüssigkeitsspiegels. Hieraus war zu erwarten, dass sich der Flüssigkeitsspiegel durch eine Anomalie im zeitlichen Verlauf der Temperaturverteilung nachweisen lässt.

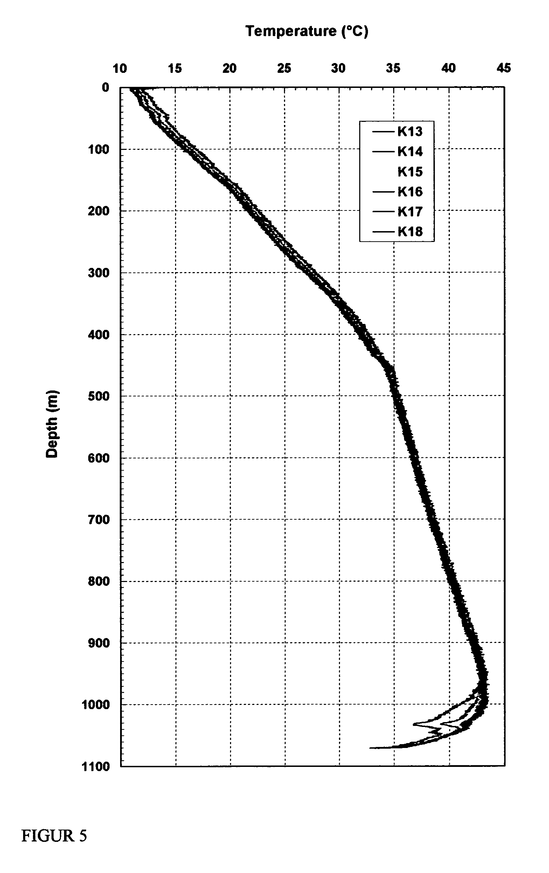

Fig. 5 zeigt den Temperaturverlauf für die Mittelwerte der Messungen K13 bis K16 für den Gesamtbereich der untersuchten Bohrung. Die aus der Kaverne aufgestiegene kältere Sole lässt sich bis ca. 960 m nachweisen. Die Temperatur sinkt deutlich ab. Im oberen Bereich der Bohrung wird dagegen die Temperatur angehoben, da aufgrund des normalen geothermischen Gradienten etwas wärmere Sole im Rohrstrang aufsteigt.

Bereits ca. zwei Stunden nach dem Ablassen der Sole stellt sich der Ausgangszustand wieder ein.

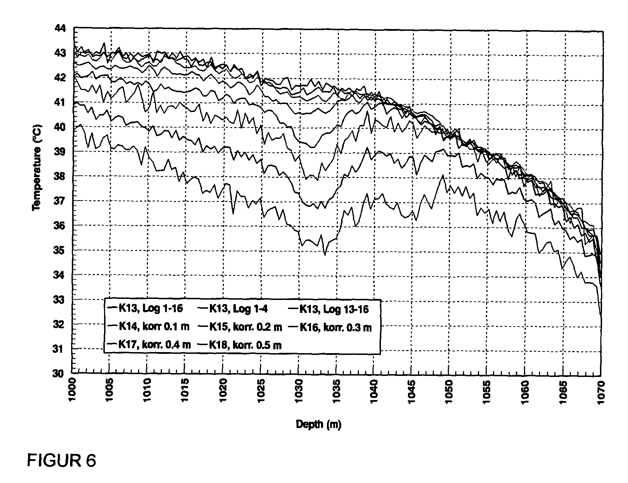

Fig. 6 zeigt den Teufenausschnitt im Bereich zwischen 1000 bis 1070 m. Deutlich ist hier zu erkennen, dass die Sole beim Ablassen in der Rohrtour um ca. 38 m bis 39 m aufgestiegen ist. Wie bereits Fig. 5 zeigt, erfolgt die Wiederangleichung der Temperatur an die Ausgangstemperatur sehr schnell.

Das Messkabel wurde, wie bereits erläutert, während des Messzyklus in Schritten von 0,1 m um insgesamt 0,5 m angehoben. Die Messkurven sind daher teufenkorrigiert.

Zwischen 1045 und 1050 m tritt eine Stufe im Kurvenverlauf auf, die besonders deutlich bei der Messung K13 ausgeprägt ist. Oberhalb dieser Stufe ist die Temperaturänderung größer als unterhalb der Stufe. Dieser Temperaturanstieg wird der Lage des Flüssigkeitsspiegels zugeordnet. Das Minimum zwischen 1030 m und 1035 m wird durch den Aufstieg der kühleren Sole beim Ablassen der Solemenge (400 I) verursacht.

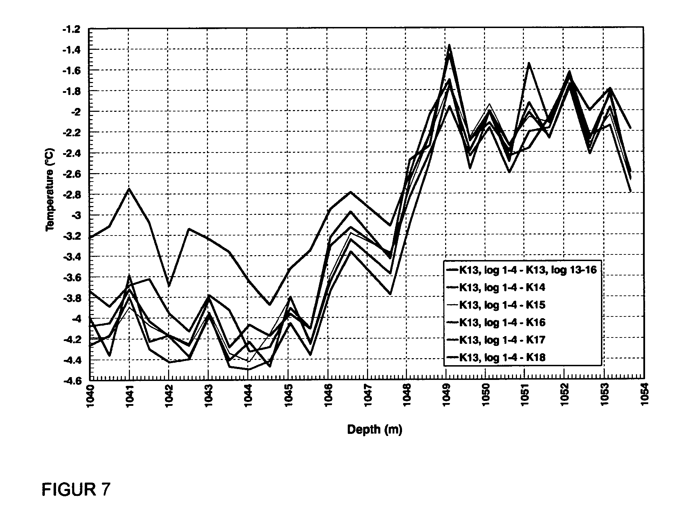

Für die weitere Auswertung wurden die Messungen K13, Log 1 bis 4, die unmittelbar nach Ablassen der 400 I Sole und dem Aufstieg der Sole in der Solegarnitur erfolgten, als Referenzkurve genutzt. Die Differenz zwischen dieser Referenzkurve und den Messungen K14 bis K18 ist in Fig. 7 dargestellt.

Trotz des Rauschens ist der Temperatursprung am Flüssigkeitsspiegel deutlich zu erkennen. Für die Festlegung der Teufe des Flüssigkeitsspiegels wird der Knickpunkt festgelegt, an dem sich die Temperaturdifferenz vergrößert. Um den Knickpunkt klarer zu erfassen, wurde der lineare Trend unterhalb des Flüssigkeitsspiegels ab 1050 m und der lineare Trend für den Bereich des Anstiegs der Temperaturdifferenz berechnet.

Es hat sich also in Auswertung der durchgeführten faseroptischen Messungen gezeigt, dass die Bestimmung der Teufenlage des Flüssigkeitsspiegels mit faseroptischen Temperaturmessungen durch den Soleentleerungsstrang möglich ist. Die Teufenwerte, die sich für die Messungen beim Ziehen des Kabels um jeweils 0,1 m ergeben, variieren zwischen 1049,3 und 1049,4 m. Die Teufenbestimmung aus der Kurve für den Ausgangszustand ergibt einen vergleichbaren Wert von 1049,4 m. Hieraus kann eine Genauigkeit bei der Teufenbestimmung des Flüssigkeitsspiegels abgeleitet werden, die mit derjenigen nach üblichen Gamma-Gamma-Messungen vergleichbar ist.

Mit der faseroptischen Temperaturmessung kann erfindungsgemäß die Temperatur-Teufen-Verteilung in der gesamten Bohrung mit einer hohen Ortsauflösung kontinuierlich während des Dichtheitstests bestimmt werden, so dass temperaturbedingte Änderungen des Testgasvolumens erfasst und korrigiert werden können. Ebenso können beispielsweise nachströmende Gasvolumina unmittelbar erkannt und erfasst werden, wenn die In-Situ-Compensation-Methode nicht anwendbar ist.

## Patentansprüche

1. Verfahren zur Prüfung der Dichtheit von Kavernenbohrungen mit Rohrtour, wobei die Kaverne mit einer Flüssigkeit, insbesondere Sole, gefüllt ist und ein Testgas in den Ringraum bis unter den Rohrschuh der letzten Rohrtour eingesetzt wird, um unterhalb des Rohrschuhs im obersten Teil des Kavernenhalses eine Grenzfläche zwischen Flüssigkeit und Testgas auszubilden, wobei weiterhin als Maß für die Dichtheit das Volumen des eingeschlossenen Gases zu verschiedenen Zeitpunkten betrachtet und die Lage oder Teufe des Flüssigkeitsspiegels festgestellt wird,
**dadurch gekennzeichnet, dass**
bevorzugt in den Flüssigkeits- oder Solestrang ein oder mehrere faseroptische Temperatursensorkabel bis unterhalb des nachzuweisenden Flüssigkeitsspiegels eingebracht sind, um den Temperaturverlauf entlang der Bohrung vom Kopf an sowie den Temperatursprung an der Grenzfläche zwischen Flüssigkeit und Testgas zu ermitteln, wobei durch die quasi-kontinuierliche Bestimmung des Temperaturverlaufs sowohl eintretende Gleichgewichtszustände erkannt werden als auch nur temperaturbedingte Änderungen des Gasvolumens kompensierbar sind.

2. Verfahren nach Anspruch 1,
**dadurch gekennzeichnet, dass**
zur Verbesserung der Ortsauflösung bei der Bestimmung des Flüssigkeitsspiegels das Sensorkabel in Schritten vorgegebener Schrittweite bewegt, vorzugsweise angehoben wird.

3. Verfahren nach einem der Ansprüche 1 oder 2,
**dadurch gekennzeichnet, dass**
zur Erhöhung des Temperaturkontrasts zwischen dem gasgefüllten Ringraum und der Flüssigkeit im Solestrang eine definierte Menge Flüssigkeit oder Sole aus dem Strang entnommen wird, so dass Flüssigkeit oder Sole aus dem Kavernenbereich nachströmen kann.

4. Verfahren nach einem der vorangegangenen Ansprüche,
**dadurch gekennzeichnet, dass**
die gesamte Temperatur-Teufen-Verteilung entlang des Verlaufs des Sensorkabels innerhalb der Kavernenbohrung zeitgleich ermittelt und aufgezeichnet wird, um den Gleichgewichtszustand nach Aufgeben des Testgases zu bestimmen.

5. Verfahren nach einem der vorangegangenen Ansprüche,
**dadurch gekennzeichnet, dass**
für den ermittelten unterschiedlichen Verlauf der Temperaturkurvenabschnitte oberhalb und unterhalb des Flüssigkeitsspiegels getrennte, approximierte Kurvenanpassungen berechnet und aus dem Schnittpunkt der Kurvenanpassungen die exakte Lage des Flüssigkeitsspiegels bestimmt wird.

6. Verfahren nach Anspruch 5,
**dadurch gekennzeichnet, dass**
für die Kurvenanpassung des Temperaturverlaufs oberhalb des Flüssigkeitsspiegels der Bereich bis zum Rohrschuh berücksichtigt wird.

7. Anordnung zur Durchführung des Verfahrens nach einem der Ansprüche 1 bis 6,
**dadurch gekennzeichnet, dass**
in die Rohrtour mindestens ein faseroptisches Temperatursensorkabel eingebracht ist, welches bis in den Kavernenbereich hinein reicht und über eine Windenvorrichtung in seiner vertikalen Position gezielt und gesteuert veränderbar ist.

8. Anordnung nach Anspruch 7,
**dadurch gekennzeichnet, dass**
am unteren Sensorkabelende eine Sonde zur Teufenmessung befindlich ist.

9. Anordnung nach Anspruch 7 oder 8,
**dadurch gekennzeichnet, dass**
das Sensorkabel in den vorhandenen oder eingebauten Solestrang eingehängt ist.

10. Anordnung nach einem der Ansprüche 7 bis 9,
**dadurch gekennzeichnet, dass**
das Sensorkabel Bestandteil eines faseroptischen Temperaturmesssystems, beruhend auf der Erfassung von Raman-Rückstreueffekten ist.

11. Anordnung nach einem der Ansprüche 7 bis 10,
**dadurch gekennzeichnet, dass**
das untere Ende des Sensorkabels als Kabelschleife ausgebildet und/oder in einer Kabelabschlussdose untergebracht ist.
